# EUROPÄISCHE PATENTSCHRIFT

(11) **EP 2 481 690 B1**
(45) Veröffentlichungstag und Bekanntmachung des Hinweises auf die Patenterteilung: **09.10.2013**
(21) Anmeldenummer: 12152668.5
(22) Anmeldetag: 26.01.2012
(51) Int. Cl.: B65G 17/38, B65G 39/20, F16C 13/00

(54) **Behälterreinigungsmaschine mit Antriebskette**
Container cleaning machine with drive chain
Machine de nettoyage de récipients avec chaîne d'entraînement

(30) Priorität: 26.01.2011 DE 102011003198
(43) Veröffentlichungstag der Anmeldung: 01.08.2012
(73) Patentinhaber: Krones AG, 93073 Neutraubling (DE)
(72) Erfinder: Siegmund, Michael, 24955 Harrislee (DE); Browatzki, Helmut, 24402 Esgrus (DE)
(74) Vertreter: Grünecker, Kinkeldey, Stockmair & Schwanhäusser

(56) Entgegenhaltungen:
- EP-A1- 2 082 978
- DE-A1-102005 047 933
- DE-A1-102008 002 455
- DE-A1-102009 006 492
- GB-A- 797 895
- GB-A- 805 449
- US-A1- 2007 267 275
- US-B1- 6 223 515
- "ZMC - ITALY - A COMPANY CONTINUALLY EVOLVING", , 2. September 2005 (2005-09-02), Seiten 1-116, XP002578565, Gefunden im Internet: URL:http://www.chainandconveyor.com/pdfs/F ullProd.pdf [gefunden am 2010-04-20]

## Beschreibung

Die Erfindung betrifft eine Behälterreinigungsmaschine nach dem Oberbegriff des Anspruchs 1.

Eine mit einem Kettentransportsystem ausgeführte Behälterreinigungsmaschine ist zum Beispiel aus DE 10 2009 006492 A1 bekannt. Diese umfasst mehrere Behandlungszonen, durch die hindurch die zu behandelnden Behälter mit Hilfe des Transportsystems bewegt werden. Das Transportsystem umfasst dabei eine Antriebskette, die aus mehreren, über Bolzen miteinander verbundenen und gelenkig aneinandergereihten Kettengliedern besteht. Zwischen den Kettengliedern sind an den Bolzen drehbar gelagert Laufrollen angeordnet, die das tragende Element der Antriebskette darstellen. Die Antriebskette unterliegt insbesondere im Bereich der Laufrollen im Betrieb einem hohen Verschleiß. Chemische Einwirkung infolge der Verwendung von Tauch-, Weich- oder Laugenbädern, Abnutzung infolge der kontinuierlich hohen mechanischen Belastung, aber auch thermische Einflüsse in den verschiedenen Behandlungszonen machen die Wartung der Kette bzw. die Kontrolle des Zustandes in regelmäßigen Abständen notwendig, was mit einem großen Montageaufwand und daher auch mit hohen Kosten verbunden ist.

Die GB 797895 offenbart eine gattungsgemäße Behälterreinigungsmaschine und beschreibt Verbesserungen von Förderketten für Flaschenreinigungsmaschinen und dergleichen. Im Einzelnen weisen die beschriebenen Ketten Laufräder auf, die an der Außenseite der Kette gesichert sind und so auch getrennt voneinander ausgetauscht werden können.

Der Erfindung liegt daher die Aufgabe zugrunde eine Antriebskette für eine Behälterreinigungsmaschine vorzuschlagen, die bei möglichst geringem Wartungsaufwand möglichst lange genutzt werden kann.

Dies wird erfindungsgemäß mit der Behälterreinigungsmaschine nach Anspruch 1 erzielt.

Bei der Antriebskette der erfindungsgemäßen Behälterreinigungsmaschine sind die Laufrollen nicht zwischen den Kettengliedern, sondern außerhalb der miteinander verbundenen Kettenglieder angeordnet. Die Laufrollen werden dabei durch eine Halteeinrichtung an einem Bolzen gesichert. Die Halteeinrichtung ist dabei so ausgeführt, dass sie einerseits die Laufrolle gegen seitliches Ausbrechen sichert und andererseits das einfache Austauschen einzelner Laufrollen unabhängig von anderen Laufrollen oder Funktionselementen der Antriebskette erlaubt. Die Halteeinrichtung kann dazu beispielsweise ein Element mit oder Bestandteil einer Schraub-, Steck-, Rast- oder Schnappverbindung zur Sicherung der Laufrolle sein. Durch diese konstruktive Änderung des Kettenaufbaus wird das einfache Herauslösen und Auswechseln einzelner Laufrollen ermöglicht, womit die restlichen Komponenten der Antriebskette im einsatzbereiten Zustand erhalten werden können und eine erhebliche Verlängerung der Laufzeit der gesamten Antriebskette erreicht wird.

Diese Antriebskette wird in einer erfindungsgemäßen Behälterreinigungsmaschine zum Transportieren von Behältnissen durch die Behandlungszonen verwendet. Dabei sind an dem umgebenden Gehäuse der Behälterreinigungsmaschine Öffnungen vorgesehen, durch die hindurch die Laufrollen kontrolliert und gewechselt werden können.

Die Halteeinrichtung zur Sicherung der Laufrolle am Bolzen kann bevorzugt als Splint, Federstecker, Klemmring, Stellring oder als Sicherungsring ausgeführt sein. Auf diese Weise ist die Halteeinrichtung von dem Bolzen lösbar und die damit gesicherte Laufrolle aus der Antriebskette entfern- und austauschbar, ohne dass weitere Komponenten der Antriebskette demontiert oder gar getauscht werden müssen. Nach dem Auswechseln der abgenutzten Laufrolle kann die Halteeinrichtung wieder befestigt bzw. in eine Position gebracht werden, die zur Sicherung der Laufrolle geeignet ist.

Vorzugsweise bestehen die Laufrollen aus einer Kombination unterschiedlicher Materialien z.B. Stahl oder Kunststoffe wie POM, PA, PEEK zur Reduzierung der bewegten Masse, der Kosten und der damit verbundenen Wartung, sowie zur Verbesserung ihrer Haltbarkeit. Weiterhin können die Laufrollen zur Reduzierung des Reibwerts als Leichtlaufrollen beispielsweise mit einem Nadellager ausgebildet sein.

In einer bevorzugten Ausführung weisen die Laufrollen zusätzlich eine Verschleißschicht auf, die bevorzugt auf der Lauffläche der Rolle aufgebracht ist. Ist die Verschleißschicht derart ausgebildet, dass man sie optisch von dem darunter liegenden Laufrollenmaterial unterscheiden kann, so kann auf diese Weise die Abnutzung der Laufrolle in einfacher Weise, beispielsweise durch Sichtinspektion, kontrolliert und festgestellt werden.

In der erfindungsgemäßen Behälterreinigungsmaschine wird die Antriebskette zum Transport der zur Reinigung vorgesehenen Behältnisse verwendet. Dabei ist die Antriebskette bevorzugt mit einem Träger verbunden, der zur Aufnahme der zu reinigenden Behältnisse geeignet ist. Daneben ist es auch möglich, dass die Antriebskette gemeinsame Bestandteile mit dem Träger selbst besitzt.

Die erfindungsgemäße Behälterreinigungsmaschine weist ein umgebendes Gehäuse auf, das wenigstens eine Öffnung aufweist, durch die hindurch ein Zugang zu der im Gehäuseinneren verlaufenden Antriebskette, insbesondere zu deren Verschleißschicht, sowie andererseits bei festgestelltem Wechselbedarf ein unmittelbarer Zugang zu den kontrollierten Laufrollen ermöglicht wird. Wenn dieser Zugang beispielsweise als Luke mit Sichtfenster ausgebildet ist, können die Laufrollen auch ohne Unterbrechung des Reinigungsbetriebs der Behälterreinigungsmaschine kontrolliert werden.

Weitere Vorteile und Ausführungsformen ergeben sich aus den beigefügten Zeichnungen. Darin zeigen:

Fig. 1 zeigt eine schematische Draufsicht auf eine Antriebskette einer erfindungsgemäßen Behälterreinigungsmaschine;

Fig. 2 zeigt eine schematische Seitenansicht einer Laufrolle;

Fig. 3a und 3b zeigen ein mögliches Verfahren zur Bestimmung der Abnutzung einer Laufrolle;

Fig. 4 zeigt eine schematische Querschnittsansicht einer erfindungsgemäßen Behälterreinigungsmaschine.

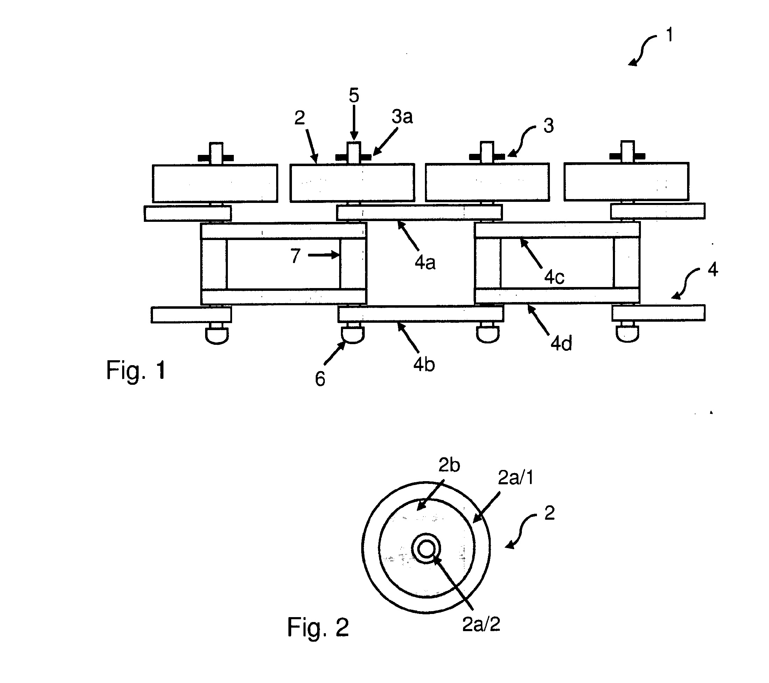

Fig. **1** zeigt eine Antriebskette **1** der erfindungsgemäßen Behälterreinigungsmaschine. Diese Antriebskette **1** umfasst mehrere Kettenglieder **4,** die über einen Bolzen **5** miteinander verbunden und gelenkig aneinandergereiht sind. Zwischen den inneren Kettengliedern **4c, 4d** kann eine Hülse **7** als Abstandshalter vorgesehen sein, durch die hindurch sich der Bolzen **5** erstreckt. Die inneren Kettenglieder **4c, 4d** und die äußeren Kettenglieder **4a, 4b** umschließen zusammen den inneren Bereich der Kette. Der Bolzen **5** ragt dabei mit beiden Enden in den Außenbereich der Kette. An dem einen Ende des stiftförmigen Bolzens **5** ist ein mit dem Bolzen meist fest verbundenes Endstück **6** zur Sicherung der Kettenverbindung vorgesehen. Auf der anderen Seite des Bolzens ist eine im Außenbereich gelagerte Laufrolle **2** drehbar an dem Bolzen 5 gelagert. Ein lösbares Halteelement **3** sichert die Laufrolle **2** gegen ein Ausbrechen in axialer Richtung.

Die hier dargestellte Antriebskette **1** verwendet als Halteelement **3** einen Splint **3a**. Der Splint **3a** wird bei der Montage in eine dafür vorgesehene Bohrung (nicht gezeigt) quer zur Längsachse des Bolzens gesteckt und sichert die Laufrolle gegen seitliches Ausbrechen. Daneben kann das Halteelement auch als Federstecker, Klemmring, Stellring oder als Sicherungsring ausgeführt sein.

Wenn die Abnutzung einer einzelnen Laufrolle **2** zu stark ist und einen Austausch notwendig macht, dann wird der zugehörige Splint **3a** entfernt. Damit kann die Laufrolle axial von dem Bolzen abgezogen werden und durch eine neue Laufrolle ersetzt werden. Anschließend wird der Splint wieder montiert, womit der Wechsel der Laufrolle abgeschlossen ist. Auf diese Weise können alle Laufrollen **2** unabhängig von den anderen Komponenten der Antriebskette 1 gewechselt werden.

Fig. 2 zeigt eine Ausführungsform der Laufrolle **2** der Antriebskette **1** aus Fig. 1. Die Laufrolle **2** ist bevorzugt als Leichtlaufrolle ausgeführt und weist auf ihrer Lauffläche eine Verschleißschicht **2a/1** bzw. im Bereich des Lagers für den Bolzen **5** eine Verschleißschicht **2a/2** auf, die sich optisch von dem übrigen Material der Laufrolle **2b** unterscheidet. Der Verschleißzustand der Laufrolle kann hierbei durch einfache optische Inspektion der Verschleißschicht **2a/1** bzw. **2a/2** überprüft werden. Der Verschleißzustand der Laufrollen wird mit Hilfe einer Sensoreinheit festgestellt.

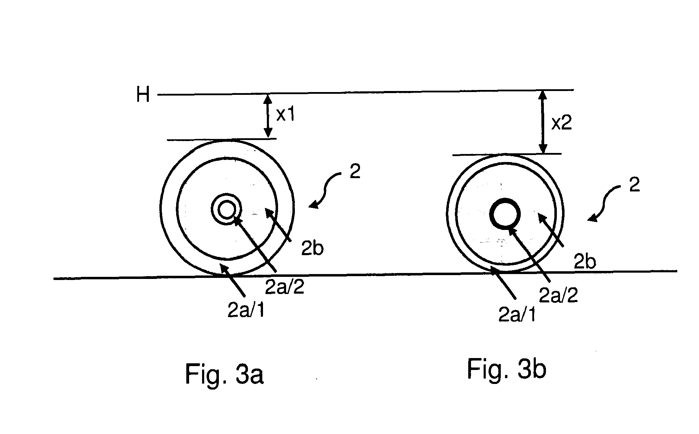

Wie in den Fig. 3a und 3b dargestellt kann der Zustand bzw. die Abnutzung der Verschleißschicht **2a/1** bevorzugt durch eine Abstandsmessung gegenüber einem definierten Messpunkt kontrolliert werden. Eine Laufrolle **2** mit Bolzen **5,** welche keine Abnutzung aufweist, besitzt beispielsweise einen Abstand x1 zwischen der Oberkante der Laufrolle **2** und einer definierten Höhenlinie H. Wenn die Laufrolle einen Verschleiß im Bereich der Verschleißschicht **2a/1** aufweist, so vergrößert sich dieser Abstand auf einen Wert x2, wie in Fig. 3b dargestellt. Ab einem kritischen Abstandswert ist der Verschleiß dieser Laufrolle zu stark und die Laufrolle **2** muss getauscht werden. Genauso könnte auch in einem analogen Messverfahren die Abnutzung der Verschleißschicht **2a/2** und ein Verschleiß des Bolzens **5** kontrolliert werden.

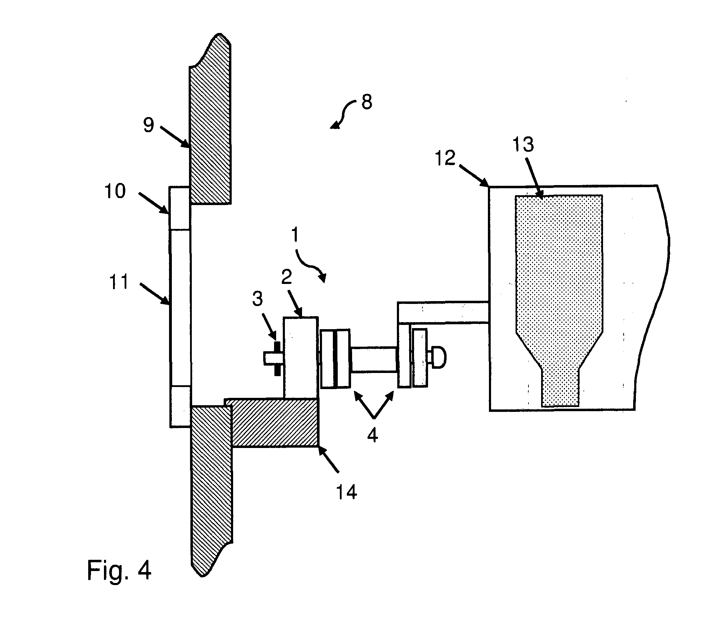

Fig. 4 zeigt einen Ausschnitt der erfindungsgemäßen Behälterreinigungsmaschine **8.** Die Darstellung zeigt eine Ansicht in Laufrichtung der Antriebskette **1** wie in Fig. 1 beschrieben, die sich innerhalb der Behälterreinigungsmaschine **8** erstreckt. Einzelne Kettenglieder **4** der Antriebskette sind mit einem Träger **12** verbunden, der zur Aufnahme von zu reinigenden Behältnissen **13** geeignet ist. Die Laufrolle **2** der Antriebskette liegt auf einer Führungsschiene **14** auf, die die Laufrichtung der Antriebskette vorgibt. Die Antriebskette **1** ist dabei im Wesentlichen derart orientiert, dass die Laufrolle **2** und der Splint **3a** vom Träger **12** weg in Richtung Gehäuse **9** weisen. Die Führungsschiene **14** ist dabei bevorzugt mit dem umgebenden Gehäuse **9** der Behälterbehandlungsmaschine **8** verbunden.

In dieser Ausführungsform der Behälterreinigungsmaschine **8** werden zwei parallel verlaufende Transportketten **1** verwendet, die an gegenüberliegenden Seiten des Trägers mit diesem verbunden werden. Der Einfachheit halber ist hier nur ein Teil des Transportsystems gezeigt.

Im Gehäuse **9** ist zusätzlich wenigstens eine Öffnung vorgesehen, die beispielsweise durch eine Luke **10** verschlossen werden kann. Bevorzugt ist an der Luke **10** oder am Gehäuse **9** ein Sichtfenster **11** angeordnet. Die Luke **10** ist dabei derart ausgelegt, dass diese bei Bedarf geöffnet, der Laufrollenwechsel durch diese hindurch ausgeführt und wieder verschlossen werden kann. Das Sichtfenster **11** ist dabei derart angeordnet, dass die Abnutzung der Laufrolle **2** vor der Öffnung durch die geschlossene Luke hindurch kontrolliert werden kann.

Die Kontrolle des Zustands der Laufrolle 2 bzw. der Verschleißschicht **2a/1** bzw. **2a/2** kann dabei durch das Sichtfenster **11** auch während des Betriebs der Behälterreinigungsmaschine **8** erfolgen. Der Verschleißzustand der Laufrollen oder der Bolzen wird mit Hilfe einer optischen oder mechanischen Sensoreinheit festgestellt. Die abgenutzte Laufrolle oder der Bolzen kann dann gezielt, mit Hilfe eines entsprechenden Programms, zu einer Luke **10** transportiert werden.

In den hier gezeigten Ausführungsbeispielen besteht die Antriebskette **1** stets aus zwei parallel angeordneten Kettengliedreihen **4a, 4c** und **4b, 4d,** die durch eine Hülse **7** räumlich voneinander getrennt sind. Genauso könnte die Antriebskette 1 bei einer Variante auch ohne Hülse **7** und/oder ohne eine zweite Kettengliedreihe **4b, 4d** ausgeführt sein.

## Patentansprüche

1. Behälterreinigungsmaschine (**8**) mit einem umgebenden Gehäuse (9) und mit einer oder mehreren Antriebsketten (**1**) mit mehreren über Bolzen (**5**) miteinander verbundenen und gelenkig aneinandergereihten Kettengliedern (**4**) sowie mit an den Bolzen drehbar gelagerten Laufrollen (**2**), **wobei** die Laufrollen (**2**) der Antriebskette außerhalb der miteinander verbundenen Kettenglieder (**4**) angeordnet sind und diese durch eine Halteeinrichtung (**3**) an dem Bolzen (**5**) so gesichert sind, dass die einzelnen Laufrollen (**2**) unabhängig voneinander austauschbar sind, und dass die Laufrollen (**2**) bevorzugt auf ihrer Lauffläche eine Verschleißschicht (**2a/1**) und/oder im Bereich des Lagers für den Bolzen (**5**) eine Verschleißschicht (**2a/2**) aufweisen, welche insbesondere auch optisch erkennbar ist, **dadurch gekennzeichnet, dass** wenigstens eine verschließbare Öffnung, beispielsweise eine Luke (**10**), die auch ein Sichtfenster (**11**) umfassen kann, am Gehäuse (**9**) der Behälterreinigungsmaschine vorgesehen ist, durch die hindurch die Laufrollen (**2**) der Antriebskette kontrolliert und ausgetauscht werden und dass an der Behälterreinigungsmaschine eine Sensoreinheit angeordnet ist, welche den Verschleiß der Laufrolle (**2**) feststellt und diese Laufrolle dann gezielt mit Hilfe eines Programms zu einer Luke (**10**) bewegen kann.

2. Behälterreinigungsmaschine nach Anspruch 1, **dadurch gekennzeichnet, dass** die Antriebskette mit einem Träger (**12**) verbunden ist oder gemeinsame Bestandteile mit dem Träger besitzt, der zur Aufnahme der zu reinigenden Behältnisse (**13**) geeignet ist.

3. Behälterreinigungsmaschine gemäß Anspruch 1 oder 2, **dadurch gekennzeichnet, dass** die Halteeinrichtung (**3**) als Splint, Federstecker, Klemmring, Stellring oder als Sicherungsring ausgeführt ist.

4. Behälterreinigungsmaschine gemäß Anspruch 1 oder 2, **dadurch gekennzeichnet, dass** die Halteeinrichtung (**3**) durch eine Schraubverbindung mit dem Bolzen verbunden ist oder selbst Bestandteil einer Schraubverbindung zur Sicherung der Laufrolle ist.

5. Behälterreinigungsmaschine gemäß Anspruch 1 oder 2, **dadurch gekennzeichnet, dass** die Halteeinrichtung (**3**) durch eine Steckverbindung mit dem Bolzen verbunden ist oder selbst Bestandteil einer Steckverbindung zur Sicherung der Laufrolle ist.

6. Behälterreinigungsmaschine gemäß Anspruch 1 oder 2, **dadurch gekennzeichnet, dass** die Halteeinrichtung (**3**) durch eine Rastverbindung mit dem Bolzen verbunden ist oder selbst Bestandteil einer Rastverbindung zur Sicherung der Laufrolle ist.

7. Behälterreinigungsmaschine gemäß Anspruch 1 oder 2, **dadurch gekennzeichnet, dass** die Halteeinrichtung (**3**) durch eine Schnappverbindung mit dem Bolzen verbunden ist oder selbst Bestandteil einer Schnappverbindung zur Sicherung der Laufrolle ist.

8. Behälterreinigungsmaschine gemäß einem der vorherigen Ansprüche, **dadurch gekennzeichnet, dass** die Laufrolle (**2**) aus mehreren Materialen besteht.

9. Behälterreinigungsmaschine gemäß einem der vorherigen Ansprüche, **dadurch gekennzeichnet, dass** die Laufrollen (**2**) als Leichtlaufrollen ausgebildet sind.

## Claims

1. Container cleaning machine (8) with a surrounding housing (9) and one or a plurality of drive chains (1) with a plurality of chain links (4) joined together by pins (5) and strung together in an articulated manner, and with rollers (2) rotatably mounted on the pins, wherein the rollers (2) of the drive chain are arranged outside of the chain links (4) which are joined together and these links are secured to the pin (5) by a holding mechanism (3) in such a way that the individual rollers (2) can be replaced independently of each other, and that the rollers (2) preferably have a wearing surface (2a/1) on their running surface and/or have a wearing surface (2a/2) in the region of the bearing for the pin (5) which can in particular also be visually seen, **characterised in that** at least one closable opening, for example a hatch (10) which can also include a viewing window (11), is provided on the housing (9) of the container cleaning machine, through which opening the rollers (2) of the drive chain are controlled and replaced, and **in that** a sensor unit is arranged on the container cleaning machine and this determines the wear on the rollers (2) and can then purposefully move this roller toward a hatch (10) with the aid of a programme.

2. Container cleaning machine according to claim 1, **characterised in that** the drive chain is connected to a carrier (12), or shares components with the carrier which is capable of receiving the containers (13) to be cleaned.

3. Container cleaning machine according to claim 1 or 2, **characterised in that** the holding mechanism (3) is designed as a splint, spring cotter pin, clamping ring, adjusting ring or as a securing ring.

4. Container cleaning machine according to claim 1 or 2, **characterised in that** the holding mechanism (3) is connected to the pin by a screwed joint or is itself a component of a screwed joint for securing the roller.

5. Container cleaning machine according to claim 1 or 2, **characterised in that** the holding device (3) is connected to the pin by a plug-in connection or is itself a component of a plug-in connection for securing the roller.

6. Container cleaning machine according to claim 1 or 2, **characterised in that** the holding mechanism (3) is connected to the pin by a latching connection or is itself a component of the latching connection for securing the roller.

7. Container cleaning machine according to claim 1 or 2, **characterised in that** the holding mechanism (3) is connected to the pin by a snap connection or is itself a component of the snap connection for securing the roller.

8. Container cleaning machine according to any one of the preceding claims, **characterised in that** the roller (2) consists of a plurality of materials.

9. Container cleaning machine according to any one of the preceding claims, **characterised in that** the rollers (2) are designed as smooth running rollers.

## Revendications

1. Machine de nettoyage de récipients (8) entourée par une enceinte (9) et comportant une ou plusieurs chaînes d'entraînement (1) avec plusieurs maillons de chaîne (4) connectés entre eux et articulés les uns aux autres via des axes (5), ainsi que des galets (2) montés de façon à pouvoir tourner sur les axes, dans laquelle les galets (2) de la chaîne d'entraînement sont agencés à l'extérieur des maillons de chaîne (4) reliés entre eux et lesdits galets sont assurés par un dispositif de retenue (3) sur les axes (5) de telle sorte que les galets individuels (2) peuvent être remplacés indépendamment les uns des autres, et que les galets (2) présentent préférablement une couche d'usure (2a/1) sur leur surface de roulement et/ou une couche d'usure (2a/2) pour l'axe (5) dans la zone du palier, qui est en particulier aussi visuellement identifiable, **caractérisée en ce qu'**au moins une ouverture fermable, par exemple un volet (10), qui peut également comporter une fenêtre d'inspection (11), est pourvue sur l'enceinte (9) de la machine de nettoyage de récipients, à travers laquelle les galets (2) de la chaîne d'entraînement peuvent être contrôlés et remplacés, et **en ce qu'**une unité à capteur est agencée sur la machine de nettoyage de récipients, ladite unité à capteur déterminant le niveau d'usure des galets (2) et permettant de déplacer ensuite ces galets de manière sélective à l'aide d'un programme vers un volet (10).

2. Machine de nettoyage de récipients selon la revendication 1, **caractérisée en ce que** la chaîne d'entraînement est connectée à un support (12) ou comporte des pièces communes au support, qui est adapté pour saisir les récipients à nettoyer (13).

3. Machine de nettoyage de récipients selon la revendication 1 ou 2, **caractérisée en ce que** le dispositif de retenue (3) est réalisé sous forme d'une goupille, d'une goupille à ressort, d'une bague de serrage, d'une bague de réglage ou d'une bague de blocage.

4. Machine de nettoyage de récipients selon la revendication 1 ou 2, **caractérisée en ce que** le dispositif de retenue (3) est connecté à l'axe à l'aide d'une connexion vissée, ou fait lui-même partie d'une connexion vissée pour assurer le galet.

5. Machine de nettoyage de récipients selon la revendication 1 ou 2, **caractérisée en ce que** le dispositif de retenue (3) est connecté à l'axe à l'aide d'une connexion enfichable, ou fait lui-même partie d'une connexion enfichable pour assurer le galet.

6. Machine de nettoyage de récipients selon la revendication 1 ou 2, **caractérisée en ce que** le dispositif de retenue (3) est connecté à l'axe à l'aide d'une connexion crantée, ou fait lui-même partie d'une connexion crantée pour assurer le galet.

7. Machine de nettoyage de récipients selon la revendication 1 ou 2, **caractérisée en ce que** le dispositif de retenue (3) est connecté à l'axe à l'aide d'une connexion à encliquetage, ou fait lui-même partie d'une connexion à encliquetage pour assurer le galet.

8. Machine de nettoyage de récipients selon l'une des revendications précédentes, **caractérisée en ce que** le galet (2) est constitué de plusieurs matériaux.

9. Machine de nettoyage de récipients selon l'une des revendications précédentes, **caractérisée en ce que** les galets (2) sont réalisés sous forme de galets à faible résistance de roulement.
